# FASCICULE DE BREVET EUROPEEN

(11) **EP 1 706 605 B1**
(45) Date de publication et mention de la délivrance du brevet: **31.10.2007**
(21) Numéro de dépôt: 04816403.2
(22) Date de dépôt: 16.12.2004
(51) Int. Cl.: F01N 3/022, C04B 37/00, C04B 35/80, C04B 41/50

(54) **STRUCTURE DE FILTRATION, NOTAMMENT FILTRE A PARTICULES, POUR LES GAZ D'ECHAPPEMENT D'UN MOTEUR A COMBUSTION INTERNE ET ORGANE D'ARMATURE DESTINE A UNE TELLE STRUCTURE**
FILTRATIONSSTRUKTUR, WIE ZUM BEISPIEL EIN TEILCHENFILTER, FÜR DIE ABGASE AUS EINEM VERBRENNUNGSMOTOR UND VERSTÄRKUNGSGLIED FÜR SOLCH EINE STRUKTUR
FILTRATION STRUCTURE, SUCH AS A PARTICLE FILTER, FOR THE EXHAUST GASES FROM AN INTERNAL COMBUSTION ENGINE AND REINFORCING MEMBER FOR ONE SUCH STRUCTURE

(30) Priorité: 24.12.2003 FR 0315407
(43) Date de publication de la demande: 04.10.2006
(73) Titulaire: Saint-Gobain Centre de Recherches et d'Etudes Européen, 92400 Courbevoie (FR)
(72) Inventeur: BARDON, Sébastien c/o Saint-Gobain C.R.E.E., 84306 Cavaillon CEDEX (FR); DUBOTS, Dominique, F-74700 SALLANCHES (FR)
(74) Mandataire: Domenego, Bertrand
(86) Numéro de dépôt international: PCT/FR2004/003263
(87) Numéro de publication internationale: WO 2005/071234

(56) Documents cités:
- EP-A- 0 816 065
- WO-A-03/048072
- US-A- 4 595 662

## Description

La présente invention concerne une structure de filtration, notamment un filtre à particules pour les gaz d'échappement d'un moteur à combustion interne selon le préambule de la revendication 1.

De telles structures sont utilisées notamment dans les dispositifs de dépollution des gaz d'échappement de moteurs à combustion interne. Ces dispositifs comportent un pot d'échappement comprenant en série un organe de purification catalytique et un filtre à particules. L'organe de purification catalytique est adapté pour le traitement des émissions polluantes en phase gazeuse, alors que le filtre à particules est adapté pour retenir les particules de suie émises par le moteur.

Dans une structure connue du type précité (voir par exemple EP -A- 0 816 065), les organes de filtration comprennent un ensemble de conduits adjacents d'axes parallèles, séparés par des parois poreuses de filtration. Ces conduits s'étendent entre une face d'admission des gaz d'échappement à filtrer et une face d'évacuation des gaz d'échappement filtrés. Ces conduits sont par ailleurs obturés à l'une ou l'autre de leurs extrémités pour délimiter des chambres d'entrée s'ouvrant sur la face d'admission et des chambres de sortie s'ouvrant sur la face d'évacuation.

Cette structure fonctionne suivant une succession de phases de filtration et de régénération. Lors des phases de filtration, les particules de suie émises par le moteur se déposent sur les parois des chambres d'entrée. La perte de charge à travers le filtre augmente progressivement. Au delà d'une valeur prédéterminée de cette perte de charge, une phase de régénération est effectuée.

Lors de la phase de régénération, les particules de suie, composées essentiellement de carbone, sont brûlées sur les parois des chambres d'entrée grâce à des moyens de chauffage auxiliaire, afin de restituer à la structure ses propriétés originelles.

Cependant, la combustion des suies dans le filtre ne se fait pas de manière homogène (la combustion démarre à l'avant et au centre du filtre puis se propage). Par suite, des gradients de température importants apparaissent dans le filtre lors des phases de régénération.

Les gradients de température au sein de la structure de filtration génèrent des dilatations locales d'amplitudes différentes, et par suite, des contraintes longitudinales et transversales dans et/ou entre les différents organes de filtration.

Ces fortes contraintes thermomécaniques sont à l'origine de fissures dans les organes de filtration et/ou dans les joints de liaison entre ces organes de filtration.

Pour limiter le risque d'apparition de ces fissures, la demande de brevet EP -A- 0 816 065 propose d'utiliser des joints de liaison qui comprennent un réseau tridimensionnel de fibres de céramique noyées dans un ciment minéral. La cohésion du réseau de fibres et la liaison entre ce réseau et le ciment sont assurés par des substances d'encollage des fibres, dont l'une est minérale, et l'autre est organique.

Les structures actuelles ne donnent pas entière satisfaction. En effet, la mise en oeuvre d'un tel joint entre les organes de filtration est peu pratique en raison notamment de la rhéologie du joint.

L'invention a pour but principal de remédier à cet inconvénient, c'est-à-dire de fournir une structure de filtration poreuse pour filtre à particules qui comprend un joint de liaison renforcé, facile à mettre en oeuvre.

A cet effet, l'invention a pour objet une structure de filtration selon la revendication 1.

La structure de filtration selon l'invention peut comporter une ou plusieurs des caractéristiques qui font l'objet des revendications 2 à 10.

Des exemples de mise en oeuvre de l'invention vont maintenant être décrits en regard des dessins annexés sur lesquels :
- la Figure 1 est une vue en perspective d'une première structure de filtration selon l'invention ;
- la Figure 2 est une vue partielle en perspective éclatée de la structure de filtration de la Figure 1 ;
- la Figure 3 est une vue en bout de la structure de filtration de la Figure 1 ; et
- la Figure 4 est une vue analogue à la Figure 3, d'une seconde structure de filtration selon l'invention.

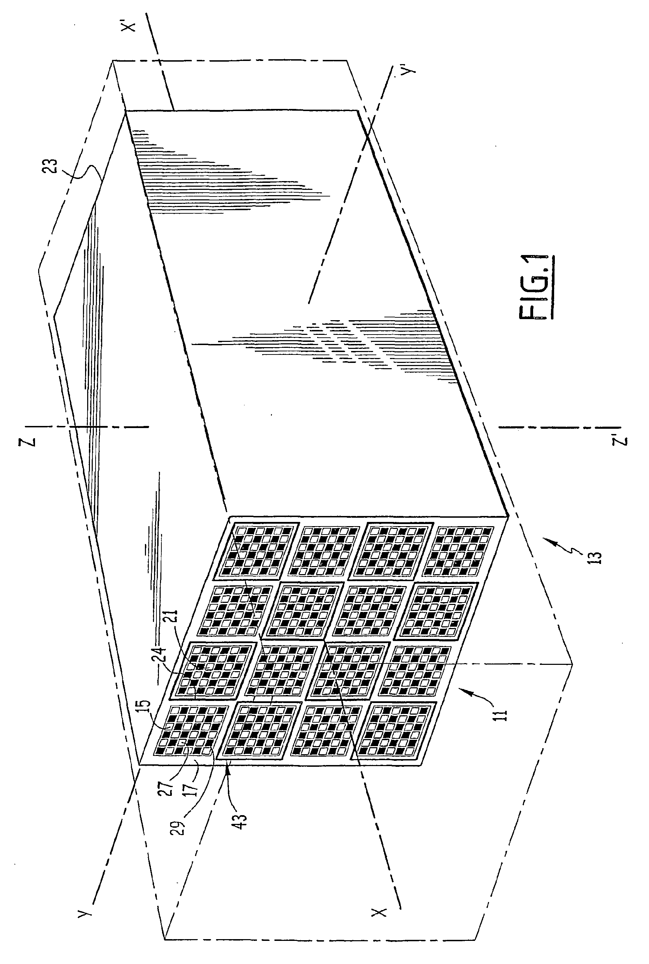

Le filtre à particules 11 représenté sur la Figure 1 est disposé dans une ligne 13 d'échappement des gaz d'un moteur diesel de véhicule automobile, représentée partiellement.

Cette ligne d'échappement 13 se prolonge au-delà des extrémités du filtre à particules 11 et délimite un passage de circulation des gaz d'échappement.

Le filtre à particules 11 s'étend suivant une direction X-X' longitudinale de circulation des gaz d'échappement. Il comprend une pluralité de blocs 15 de filtration reliés entre eux par des joints de liaison 17.

Chaque bloc de filtration 15 est de forme sensiblement parallélépipédique rectangle allongé suivant la direction longitudinale X-X'.

Le terme « bloc de filtration » désigne plus largement un ensemble comportant une face d'entrée, une face de sortie et au moins trois faces latérales (quatre faces latérales dans l'exemple représenté) qui relient la face d'entrée à la face de sortie.

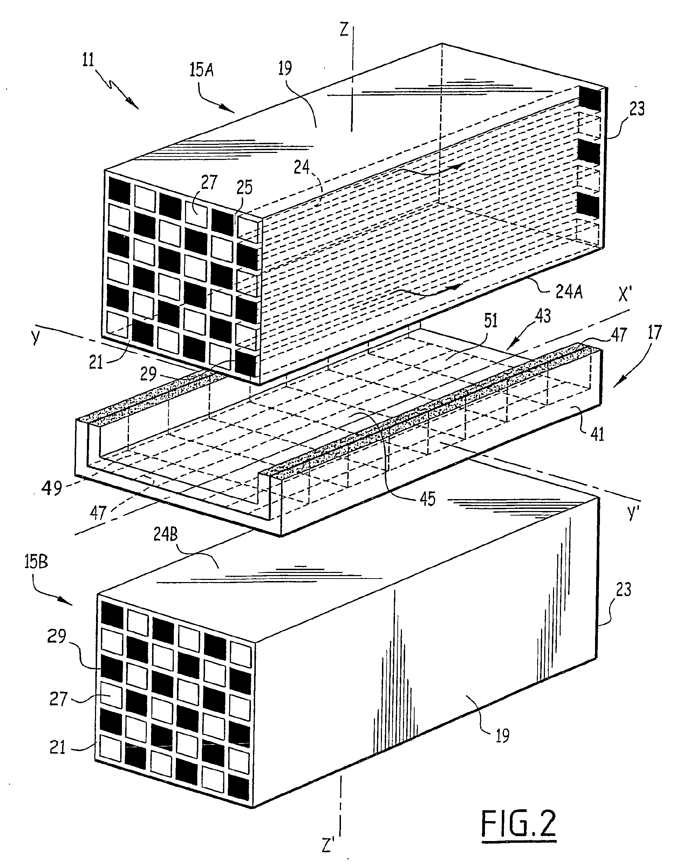

Comme illustré sur la Figure 2 où on a représenté deux blocs de filtration 15A et 15B superposés, chaque bloc de filtration 15 comporte une structure de filtration 19 poreuse, une face 21 d'admission des gaz d'échappement à filtrer, une face 23 d'évacuation des gaz d'échappement filtrés, et quatre faces latérales 24.

La structure de filtration poreuse 19 est réalisée en un matériau de filtration constitué d'une structure monolithique, notamment en céramique (cordiérite ou carbure de silicium).

Cette structure 19 possède une porosité suffisante pour permettre le passage des gaz d'échappement. Cependant, comme connu en soi, le diamètre des pores est choisi suffisamment petit pour assurer une retenue des particules de suie.

La structure poreuse 19 comporte un ensemble de conduits adjacents d'axes parallèles à la direction longitudinale X-X'. Ces conduits sont séparés par des parois 25 poreuses de filtration. Dans l'exemple illustré sur la Figure 2, ces parois 25 sont d'épaisseur constante et s'étendent longitudinalement dans la structure de filtration 19, de la face d'admission 21 à la face d'évacuation 23.

Les conduits sont répartis en un premier groupe de conduits d'entrée 27 et un second groupe de conduits de sortie 29. Les conduits d'entrée 27 et les conduits de sortie 29 sont disposés tête-bêche.

Les conduits d'entrée 27 sont obturés au niveau de la face d'évacuation 23 du bloc de filtration 15 et sont ouverts à leur autre extrémité.

Au contraire, les conduits de sortie 29 sont obturés au niveau de la face d'admission 21 du bloc de filtration 15 et débouchent suivant sa face d'évacuation 23.

Dans l'exemple illustré en regard de la Figure 2, les conduits d'entrée 27 et de sortie 29 ont des sections constantes suivant toute leur longueur.

En outre, les faces latérales 24A et 24B en regard des blocs de filtration 1 5A et 15B sont planes.

Comme illustré sur la Figure 2, le joint de liaison 17 est disposé entre les faces planes 24A et 24B en regard des blocs de filtration 15A et 15B. Ce joint de liaison 17 comprend un liant 41 et des moyens de renfort 43, noyés dans ce liant 41.

Le liant 41 est réalisé à base de ciment céramique, généralement constitué de silice et/ou de carbure de silicium et/ou de nitrure d'aluminium. Après frittage, ce ciment a un module d'élasticité de 500 à 5000 MPa.

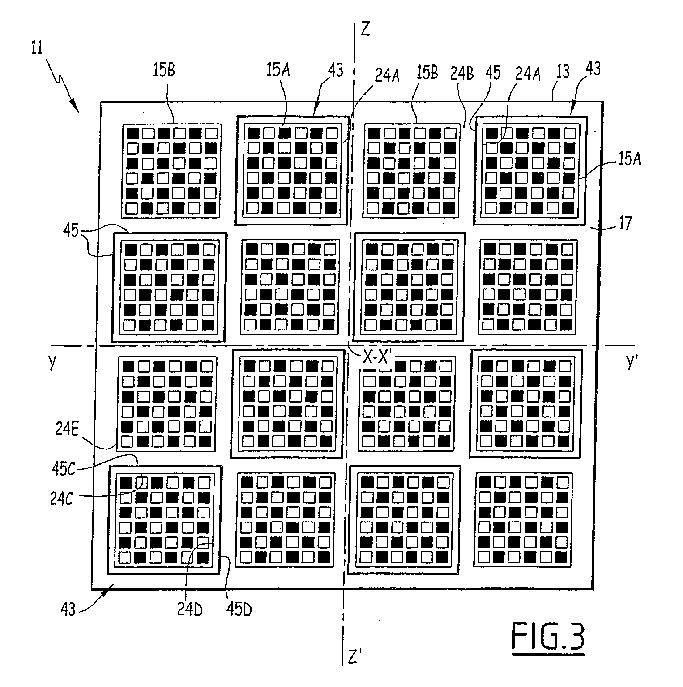

Comme illustré sur la Figure 3, les moyens de renfort comprennent des manchons 43 disposés alternativement autour d'un bloc de filtration 15 sur deux, lorsqu'on se déplace parallèlement à un premier axe transversal Y-Y' de la structure de filtration 11 (horizontal sur la Figure 3). Par ailleurs, les manchons 43 sont disposés alternativement autour d'un bloc de filtration 15A sur deux, lorsqu'on se déplace parallèlement à un deuxième axe transversal Z-Z' de la structure 11 (vertical sur la Figure 3).

Ainsi, chaque bloc de filtration 15A entouré par un manchon 43 est adjacent à des blocs de filtration 15B libres, c'est-à-dire qui ne sont pas entourés par un manchon 43. Par ailleurs, chaque bloc de filtration libre 15B est adjacent à des blocs de filtration 15A entourés de manchons.

Chaque manchon 43 comprend quatre parties actives 45 de forme générale sensiblement plane, dont chacune s'étend sur sensiblement toute la surface adjacente du bloc 15A correspondant.

Par « partie active de forme générale sensiblement plane », on entend une partie 45 dont la dimension, prise parallèlement à un axe transversal horizontal ou vertical Y-Y' ou Z-Z' est inférieure à au moins deux fois la dimension de la partie 45 prise parallèlement à l'autre axe transversal vertical ou horizontal et à la dimension de la partie 45, prise parallèlement à la direction longitudinale X-X' de la structure de filtration 11.

Comme illustré sur la Figure 3, chaque partie active 45 est disposée entre une face 24A d'un bloc 15A entouré par un manchon 43 et une face 24B d'un bloc libre 15B.

En se référant à la Figure 2, chaque partie active 45 comprend une pluralité de poutres 47 métalliques disposées parallèlement à la direction longitudinale X-X' de la structure. Par ailleurs, la partie active 45 comprend une pluralité de traverses 49 métalliques qui relient lesdites poutres 47. Ces traverses 49 sont disposées parallèlement à l'axe transversal Y-Y', perpendiculaire à la direction longitudinale X-X' de la structure.

Ainsi, les poutres 47 et les traverses 49 délimitent une pluralité de lumières 51. La partie active 45 est ainsi ajourée, ce qui permet de la noyer dans le ciment 41, et possède une cohérence ou une tenue mécanique propre ou autonome, par opposition à une masse de fibres noyées dans le ciment de façon aléatoire.

Dans l'exemple illustré à la Figure 2, les poutres 47 et les traverses 49 sont constituées par des tiges de diamètre inférieur à la distance qui sépare deux tiges successives, prise parallèlement à la direction longitudinale X-X' de la structure ou à l'axe transversal Y-Y'. Ainsi, le volume des lumières 51 est supérieur au volume total des poutres 47 et des traverses 49.

Ces lumières 51 définissent ainsi une structure périodique suivant la direction longitudinale X-X' et suivant l'axe Y-Y'.

L'orientation des poutres 47 et des traverses 49 renforce les propriétés mécaniques du joint 17 dans un plan parallèle aux faces 24A et 24B des blocs de filtration 15A et 15B en regard.

Par ailleurs, les poutres 47 et les traverses 49 étant réalisées à base d'un matériau métallique, elles constituent des axes privilégiés de propagation des flux thermiques au sein du joint 17. Elles permettent ainsi de répartir la chaleur dégagée par la combustion des suies, de manière plus uniforme au sein du joint 17 et de réduire la formation de points chauds dans ce joint 17.

Dans le cas où les contraintes thermomécaniques sont trop fortes dans la structure 11, les fissures générées dans le joint 17 par le relâchement de la structure 11 sont orientées le long des poutres 47 et des traverses 49.

Comme illustré sur la Figure 3, les parties actives 45C et 45D en regard de deux faces adjacentes 24C et 24D de chaque bloc 15 entouré par un manchon 43 sont reliées entre elles. Cette disposition particulière améliore aussi la cohésion du joint 17 entre deux faces 24C et 24E en regard, suivant une direction orthogonale au plan défini par la partie active 45C disposée entre ces deux faces 24C et 24E.

Le fonctionnement de la première structure de filtration selon l'invention va maintenant être décrit.

Lors d'une phase de filtration (Figure 1), les gaz d'échappement chargés de particules sont guidés jusqu'aux faces d'entrée 21 des blocs de filtration 15 par la ligne d'échappement 13. Ils pénètrent ensuite dans les conduits d'entrée 27, et passent à travers les parois 25 de la structure poreuse 19 (Figure 2). Lors de ce passage, les suies se déposent sur les parois 25 des conduits d'entrée 27. Ces suies se déposent préférentiellement au centre du filtre à particules 11 et vers la face d'évacuation 23 des blocs de filtration 15 (à droite sur le dessin).

Les gaz d'échappement filtrés s'échappent par les conduits d'évacuation 29 et sont guidés vers la sortie du pot d'échappement.

Lorsque le véhicule a parcouru 500 km environ, la perte de charge à travers le filtre 11 augmente de manière significative. Une phase de régénération est alors effectuée.

Dans cette phase, les suies sont oxydées par élévation de la température du filtre 11. Cette oxydation est exothermique. La propagation de la régénération ainsi que la répartition inhomogène des suies dans le filtre 11 provoque un gradient de température entre les zones de forte accumulation des suies et des zones de faible accumulation des suies.

Par ailleurs, les blocs de filtration 15 et les joints 17 se dilatent sous l'effet de la température. L'amplitude locale de cette dilatation dépend de la température.

Ces variations d'amplitude de dilatation, sous l'effet des gradients de température, génèrent de fortes contraintes thermomécaniques.

Comme précisé précédemment, les manchons 43 assurent la cohésion du joint 17 lorsqu'il est soumis à ces fortes contraintes.

Dans le cas où les contraintes thermomécaniques sont trop fortes dans la structure, les fissures générées dans le joint 17 par le relâchement de la structure 11 sont orientées le long des poutres 47 et des traverses 49 des manchons 43.

Par ailleurs, l'amplitude des gradients de température est diminuée par une meilleure diffusion des flux thermiques à travers les manchons 43.

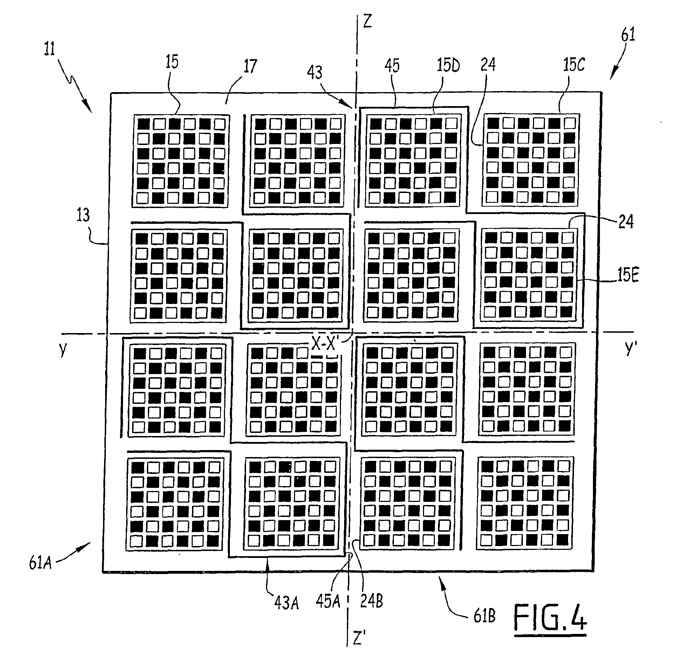

Dans la variante illustrée en regard de la Figure 4, la structure comprend des cellules 61 qui comportent quatre blocs de filtration 15 adjacents.

Au sein d'une cellule, chaque bloc de filtration 15C comprend deux faces adjacentes 24 en regard respectivement de deux faces de deux autres blocs de filtration 15D, 15E de la cellule 61.

Chaque cellule 61 comprend en outre un organe d'armature 43 commun pour les quatre blocs de filtration 15.

Comme illustré sur la Figure 4, l'organe d'armature 43 de chaque cellule a une forme sinueuse et comprend une pluralité de parties actives successives 45 de forme sensiblement plane reliées entre elles en série. Ainsi, chaque partie active 45 est reliée au plus à deux autres parties actives 45 de l'organe d'armature 43.

Par ailleurs, les parties actives 45 reliées entre elles, s'étendent dans des plans orthogonaux.

Par suite, au sein de chaque cellule 61, l'organe d'armature 43 comprend au moins deux parties actives 45 en regard respectivement de deux faces adjacentes 24 de chaque bloc de filtration 15.

La cohésion au sein d'une cellule de filtration 61 est alors renforcée parallèlement à la direction longitudinale X-X' de la structure 11, parallèlement à l'axe horizontal Y-Y' et parallèlement à l'axe vertical Z-Z' de cette structure 11.

Par ailleurs, la structure de filtration 11 comprend une pluralité de cellules 61. Comme illustré sur la Figure 4, pour chaque paire de cellules adjacentes, au moins une partie active 45A de l'organe d'armature 43A d'une première cellule 61A est disposée en regard d'une face 24B d'un bloc de filtration 15B d'une deuxième cellule 61 B adjacente, afin d'assurer la cohésion mécanique entre les différentes cellules 61.

En variante, les poutres 47 et les traverses 49 peuvent avoir d'autres orientations, par exemple à 45° des axes X-X' et Y-Y' ou à 30° de l'un de ces axes.

En variante également, l'organe d'armature comprend des parties actives formées à l'aide d'une toile tissée. La toile tissée est réalisée à base de fibres, par exemple organiques, qui se dégradent à des températures supérieures à 150°C.

Cet organe d'armature disparaît par combustion, soit lors de l'élaboration de la structure de filtration, soit lors d'un échauffement local au sein du joint. Toutefois, les passages créés dans l'espace préalablement occupé par les fibres organiques de l'organe d'armature favorisent le relâchement des contraintes dans le joint de filtration, et dans le cas où les contraintes thermomécaniques sont trop fortes, assurent la propagation de fissures le long de ces passages.

Dans une autre variante, les parties actives de l'organe d'armature comprennent des plaques ajourées ou des tôles ondulées ajourées afin de diminuer l'amplitude des gradients thermiques au sein de la structure.

Grâce à l'invention qui vient d'être décrite, il est possible de disposer d'une structure de filtration qui peut endurer une multitude de phases de régénération tout en préservant sa cohésion mécanique et son étanchéité par rapport aux suies.

Dans cette structure, le relâchement des contraintes thermomécaniques et la formation d'éventuelles fissures dans le joint sont orientés suivant des directions privilégiées.

Cette structure assure en outre une meilleure répartition des températures au sein du joint, dans le cas où l'organe d'armature est réalisé à base d'un matériau métallique.

## Revendications

1. Structure de filtration (11), notamment filtre à particules pour les gaz d'échappement d'un moteur à combustion interne, du type comprenant :
- au moins des premier et deuxième organes de filtration (15A, 15B) présentant respectivement une première et une seconde faces (24A, 24B), disposées en regard l'une de l'autre ;
- un joint de liaison (17) desdites faces (24A, 24B), s'étendant entre lesdites faces (24A, 248), ce joint (17) comprenant un liant (41) et des moyens de renfort (43) noyés dans ce liant (41),
**caractérisée en ce que** lesdits moyens de renfort (43) comportent au moins un organe d'armature ajouré ayant une cohérence autonome et comprenant au moins une partie active (45) ajourée et noyée dans le liant, de forme générale sensiblement plane, la partie active (45) présentant une tenue mécanique propre.

2. Structure (11) selon la revendication 1, **caractérisée en ce que** ladite partie active (45) comprend une pluralité de poutres (47) disposées sensiblement parallèlement à une première direction (X-X').

3. Structure (11) selon la revendication 2, **caractérisée en ce que** ladite partie active (45) comprend une pluralité de traverses (49) reliant lesdites poutres (47) et disposées sensiblement parallèlement à une deuxième direction (Y-Y'), distincte de la première direction (X-X').

4. Structure (11) selon la revendication 3, **caractérisée en ce que** le volume total des lumières (51) délimitées par lesdites poutres (47) et par lesdites traverses (49) est supérieur au volume total desdites poutres (47) et desdites traverses (49).

5. Structure (11) selon l'une quelconque des revendications précédentes, **caractérisée en ce que** l'organe d'armature (43) est réalisé à base d'un matériau métallique.

6. Structure (11) selon l'une des revendications 1 à 4, **caractérisée en ce que** l'organe d'armature (43) est réalisé à base d'un matériau qui se dégrade à des températures supérieures à 15d °C.

7. Structure (11) selon l'une quelconque des revendications précédentes, **caractérisée en ce que** l'organe d'armature (43) comprend une partie active (45C, 45D) en regard de deux faces adjacentes (24C, 24D) de l'organe de filtration (24C, 24D), lesdites parties actives (45C, 45D) étant reliées entre elles.

8. Structure (11) selon l'une quelconque des revendications précédentes, **caractérisée en ce qu'**elle comprend au moins une cellule (61) comportant quatre organes de filtration (15), et un organe d'armature (43) commun, de forme sinueuse, pour lesdits organes de filtration (15), l'organe d'armature commun (43) comportant au moins trois parties actives successives (45) disposées en regard de faces adjacentes (24) des organes de filtration (15) de la cellule (61).

9. Structure (11) selon la revendication 8, **caractérisée en ce qu'**elle comprend au moins des première et deuxième cellules (61A, 61 B), au moins une partie active (45A) de l'organe d'armature (43A) de la première cellule (61A) étant disposée en regard d'une face (24B) d'un organe de filtration (15B) de la deuxième cellule (61B).

10. Structure (11) selon l'une quelconque des revendications précédentes, **caractérisée en ce que** la ou chaque partie active est formée à l'aide d'une toile tissée, d'une tôle ondulée ajourée ou d'une plaque ajourée.

## Claims

1. Filtration structure (11), in particular a particle filter for the exhaust gases of an internal combustion engine, of the type comprising:
- at least first and second filter members (15A, 15B) having respective first and second sides (24A, 24B) facing opposite each other,
- a junction (17) connecting the said faces (24A, 24B) extending between the said faces (24A, 24B), this junction (17) comprising a binder (41) and reinforcing means (43) embedded in that binder (41),
**characterised in that** the said reinforcing means (43) comprise at least one perforated reinforcing member which is self-supporting and comprises at least one perforated active part (45) embedded in the binder, of generally substantially planar shape, the active part (45) having its own mechanical strength.

2. Structure (11) according to claim 1, **characterised in that** the said active part (45) comprises a plurality of beams (47) arranged substantially parallel to a first direction (X-X').

3. Structure (11) according to claim 2, **characterised in that** the said active part (45) comprises a plurality of cross-members (49) connecting the said beams (47) and located substantially parallel to a second direction (Y-Y') which differs from first direction (X-X').

4. Structure (11) according to claim 3, **characterised in that** the total volume of the spaces (51) bounded by the said beams (47) and the said cross-members (49) is greater than the total volume of the said beams (47) and the said cross-members (49).

5. Structure (11) according to any one of the preceding claims, **characterised in that** the reinforcing member (43) is constructed using a metal material.

6. Structure (11) according to any one of claims 1 to 4, **characterised in that** the reinforcing member (43) is made of a material which degrades at temperatures in excess of 150°C.

7. Structure (11) according to any one of the preceding claims, **characterised in that** the reinforcing member (43) comprises an active part (45C, 45D) opposite two adjacent faces (24C, 24D) of the filter member (24C, 24D), the said active parts (45C, 45D) being connected together.

8. Structure (11) according to any one of the preceding claims, **characterised in that** it comprises at least one cell (61) comprising four filter members (15) and one common reinforcing member (43) of sinuous shape for the said filter members (15), the common reinforcing member (43) having at least three successive active parts (45) located opposite the adjacent faces (24) of the filter members (15) of the cell (61).

9. Structure (11) according to claim 8, **characterised in that** it comprises at least first and second cells (61 A, 61 B), at least one active part (45A) of the reinforcing member (43A) for the first cell (61A) being located opposite one face (24B) of a filter member (15B) of the second cell (61 B).

10. Structure (11) according to any one of the preceding claims, **characterised in that** the or each active part is formed using a woven fabric, a perforated corrugated sheet or a perforated plate.

## Patentansprüche

1. Filtrationsstruktur (11), insbesondere Partikelfilter für die Abgase eines Verbrennungsmotors der Art mit :
- zumindest einem ersten und zweiten Filtrationsorgan (15A, 15B), welche jeweils eine erste und zweite Fläche (24A, 24B) aufweisen, die einander gegenüber liegend angeordnet sind;
- einem Verbindungsstoß (17) dieser Flächen (24A, 24B), der sich zwischen diesen Flächen (24A, 24B) erstreckt, wobei dieser Stoß (17) ein Bindemittel (41) und in diesem Bindemittel (41) eingebettete Verstärkungsvorrichtungen (43) aufweist,
**dadurch gekennzeichnet, dass** die Verstärkungsvorrichtungen (43) zumindest ein durchbrochenes Verstärkungsglied aufweisen, welches eine eigenständige Kohärenz aufweist, und welches zumindest einen durchbrochenen und in dem Bindemittel eingebetteten, aktiven Bereich (45) mit praktisch allgemein flacher Form aufweist, wobei der aktive Bereich (45) einen eigenen mechanischen Halt aufweist.

2. Struktur (11) gemäß Anspruch 1, **dadurch gekennzeichnet, dass** der aktive Bereich (45) eine Vielzahl von Trägern (47) aufweist, welche praktisch parallel zu einer ersten Richtung (X-X') angeordnet sind.

3. Struktur (11) gemäß Anspruch 2, **dadurch gekennzeichnet, dass** der aktive Bereich (45) eine Vielzahl von Querträgern (49) aufweist, welche die Träger (47) miteinander verbinden, und welche sich praktisch parallel zu einer zweiten, von der ersten Richtung (X-X') unterschiedlichen Richtung (Y-Y') erstrecken.

4. Struktur (11) gemäß Anspruch 3, **dadurch gekennzeichnet, dass** das Gesamtvolumen der von den Trägern (47) und von den Querträgern (49) begrenzten Langlöcher (51) größer ist als das Gesamtvolumen der Träger (47) und der Querträger (49).

5. Struktur (11) gemäß irgendeinem der vorherigen Ansprüche, **dadurch gekennzeichnet, dass** das Verstärkungsglied (43) auf der Basis eines Metallmaterials ausgeführt ist.

6. Struktur (11) gemäß einem der Ansprüche 1 bis 4, **dadurch gekennzeichnet, dass** das Verstärkungsglied (43) auf der Basis eines Materials hergestellt ist, das sich bei höheren Temperaturen als 150°C auflöst.

7. Struktur (11) gemäß irgendeinem der vorherigen Ansprüche, **dadurch gekennzeichnet, dass** das Verstärkungsglied (43) einen aktiven Bereich (45C, 45D) gegenüber den beiden aneinander angrenzenden Flächen (24C, 24D) des Filtrationsorgans (24C, 24D) aufweist, wobei die aktiven Bereiche (45C, 45D) untereinander verbunden sind.

8. Struktur (11) gemäß irgendeinem der vorherigen Ansprüche, **dadurch gekennzeichnet, dass** sie zumindest eine Zelle (61) aufweist, welche vier Filtrationsorgane (15) und ein gemeinsames Verstärkungsglied (43) mit kurviger Form für die Filtrationsorgane (15) aufweist, wobei das gemeinsame Verstärkungsglied (43) zumindest drei aufeinander folgende aktive Bereiche (45) aufeist, die gegenüber den angrenzenden Flächen (24) der Filtrationsorgane (15) der Zelle (61) angeordnet sind.

9. Struktur (11) gemäß Anspruch 8, **dadurch gekennzeichnet, dass** sie zumindest eine erste und eine zweite Zelle (61A, 61B) aufweist, wobei zumindest ein aktiver Bereich (45A) des Verstärkungsgliedes (43A) der ersten Zelle (61A) gegenüber einer Fläche (24B) eines Filtrationsorgans (15B) der zweiten Zelle (61 B) angeordnet ist.

10. Struktur (11) gemäß irgendeinem der vorherigen Ansprüche, **dadurch gekennzeichnet, dass** der oder jeder aktive-Bereich mit Hilfe eines gewebten Tuches, eines durchbrochenen Wellblechs oder einer durchbrochenen Platte gebildet ist.
